# EUROPÄISCHE PATENTSCHRIFT

(11) **EP 0 701 301 B1**
(45) Veröffentlichungstag und Bekanntmachung des Hinweises auf die Patenterteilung: **20.01.1999**
(21) Anmeldenummer: 95112069.0
(22) Anmeldetag: 01.08.1995
(51) Int. Cl.: H01R 13/58, G01K 1/14, H01R 13/56

(54) **Knickschutzvorrichtung für ein elektrisches Kabel**
Buckling protection device for an electrical cable
Dispositif de protection contre le flambage pour un câble électrique

(30) Priorität: 16.08.1994 DE 9413224 U
(43) Veröffentlichungstag der Anmeldung: 13.03.1996
(73) Patentinhaber: TESTO GmbH & Co., D-79853 Lenzkirch (DE)
(72) Erfinder: Zahn, Patrick, D-79199 Kirchzarten (DE); Binder, Jörg, D-79877 Friedenweiler (DE)
(74) Vertreter: Patentanwälte Westphal, Buchner, Mussgnug Neunert, Göhring

(56) Entgegenhaltungen:
- DE-C- 560 829
- GB-A- 958 169
- GB-A- 2 175 756

## Beschreibung

Die Erfindung betrifft eine Knickschutzvorrichtung für ein elektrisches Kabel nach dem Oberbegriff des Anspruchs 1.

Viele elektrische Geräte sind handbetätigbar und weisen zu dieser Betätigung einen Handgriff auf. Aus einem Kabelende des Handgriffs ist ein elektrisches Anschlußkabel herausgeführt, das in einem an den Handgriff anschließenden Abschnitt von einer elastischen Knickschutzmanschette umfaßt ist, um ein Abknicken des Kabels bei starker Belastung und somit eine Unterbrechung des elektrischen Anschlusses zu verhindern. Wenn der Handgriff eines derartigen Geräts bei Betätigung desselben jedoch mechanisch besonders beansprucht wird, so kann das Kabel trotz der Knickschutzmanschette abgeknickt und dadurch unterbrochen werden. Wenn das Gerät beispielsweise als Temperaturfühler mit einer am vorderen Ende des Handgriffs sitzenden langgestreckten starren Sonde ausgebildet ist, kann es erforderlich sein, diese Sonde in festes Material einschieben zu müssen. Der Benutzer drückt dann meist auf das Kabelende des Handgriffs, um mehr Druck ausüben zu können. Dabei kann es besonders leicht zum Abknicken des Kabels trotz Knickschutzmanschette kommen.

Durch die Erfindung soll eine Knickschutzvorrichtung für derartige Geräte geschaffen werden, bei der ein Abknicken des Kabels samt Knickschutzmanschette weitgehend ausgeschlossen ist.

Diese Aufgabe wird erfindungsgemäß durch die Merkmale des Anspruchs 1 gelöst.

Durch die Anordnung der Knickschutzmanschette praktisch innerhalb des Handgriffs, d.h. zwischen den beiden Zinken des gabelförmigen Endes des Handgriffs, ist ohne weiteres ein Drücken auf den Handgriff vom Kabelende des Handgriffs her möglich, wobei das Kabel sich nur leicht seitlich zwischen den beiden Zinken herausbiegt, ohne stärker umgeknickt zu werden. Dadurch ist aber eine Beschädigung der Knickschutzmanschette weitgehend ausgeschlossen. Insgesamt wird durch diese Maßnahmen die Gesamtlänge des Handgriffs im wesentlichen nicht vergrößert, da die den Kabelabschnitt mit der Knickschutzmanschette aufnehmende Ausnehmung zwischen den beiden Gabelzinken praktisch im Inneren der Handgriffkontur liegt. Zur Erzielung einer größeren Druckkraft auf das Kabelende des Handgriffs kann ohne weiteres der Handballen oder die Handfläche auf das Kabelende aufgelegt und Druck auf dasselbe ausgeübt werden, wobei das Kabel seitlich ausweicht, ohne zu knicken.

Anspruch 2 ist auf die besonders bevorzugte Ausführungsform der an einem Temperaturfühler angebrachten Knickschutzvorrichtung gemäß der Erfindung gerichtet.

Anhand der Figuren wird ein Ausführungsbeispiel der Erfindung näher erläutert. Es zeigt:

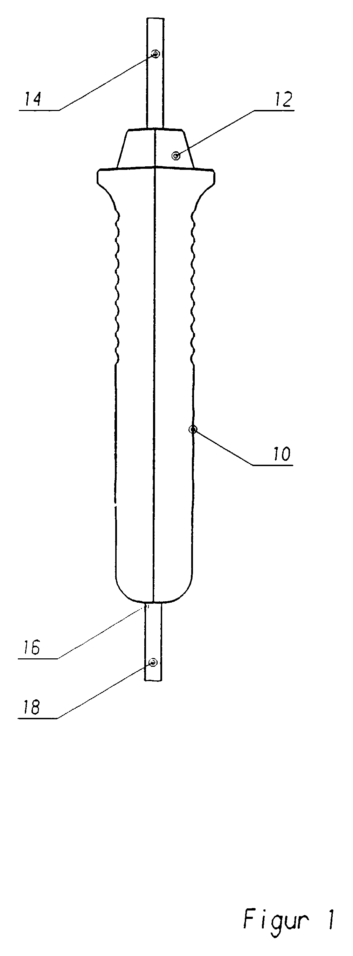

- Fig. 1: eine Seitenansicht eines Temperaturfühlers mit der erfindungsgemäßen Knickschutzvorrichtung,

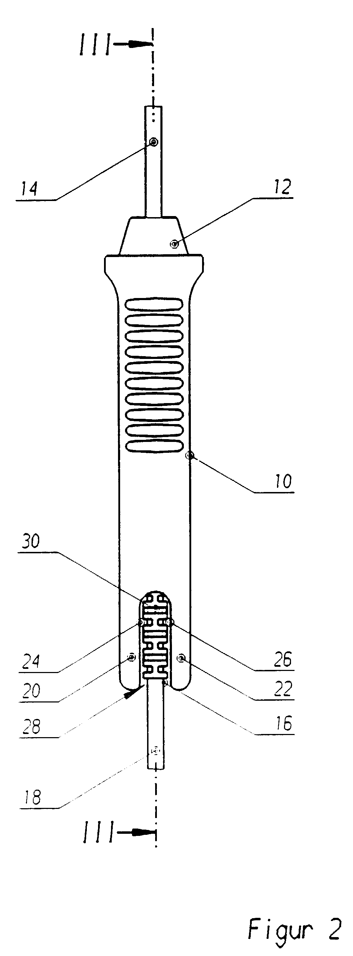

- Fig. 2: eine Draufsicht auf das in Fig. 1 gezeigte Gerät,
- Fig. 3: einen Schnitt längs der Linie III-III in Fig.2, und

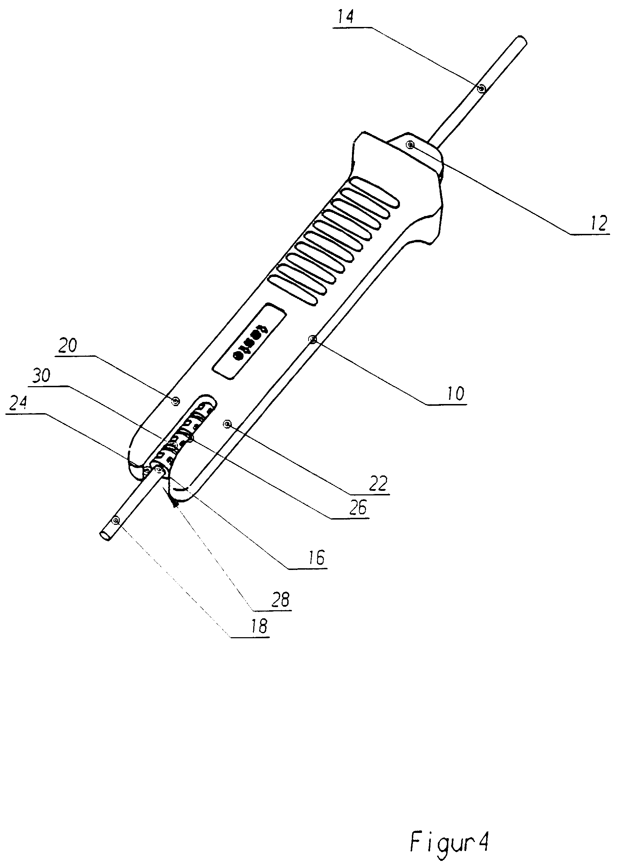

- Fig. 4: eine Schrägansicht des Geräts von rechts hinten.

In allen Figuren sind gleiche oder entsprechende Teile mit den gleichen Bezugszeichen versehen.

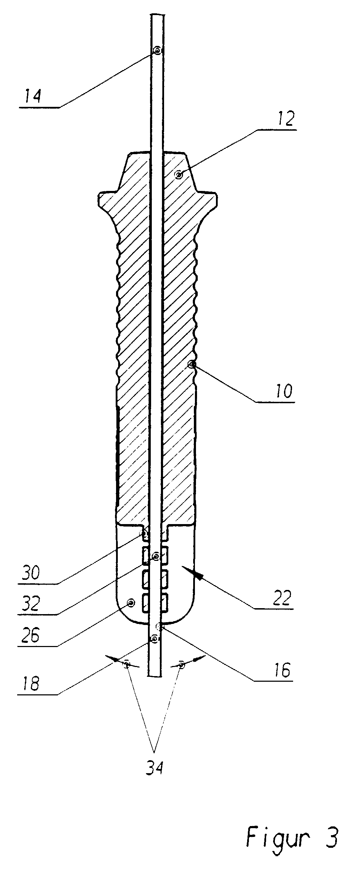

Das in den Figuren dargestellte Gerät stellt einen Temperaturfühler mit einem Handgriff 10, einer aus dem vorderen Ende 12 des Handgriffs 10 axial vorstehenden langgestreckten starren Sonde 14 und einem aus dem dem vorderen Ende 12 entgegengesetzten Kabelende 16 nach außen geführten elektrischen Anschlußkabel 18 dar. Die schaltungsmäßigen Einzelheiten eines derartigen Temperaturfühlers sind bekannt und daher im Schnitt gemäß Fig. 3 nicht näher dargestellt.

Das Kabelende 16 des Handgriffs 10 ist gabelförmig in zwei flache Zinken 20 und 22 aufgespalten, deren Breitseiten 24 und 26 parallel zueinander angeordnet sind und zwischen sich eine von der Oberseite zur Unterseite des Handgriffs 10 durchgehende schlitzförmige Ausnehmung 28 einschließen. In der Ausnehmung 28 ist ein von einer üblichen Knickschutzmanschette 30 umfaßter Abschnitt 32 des Kabels 18 angeordnet, wenn sich das Kabel im unbelasteten Zustand befindet. Dadurch befindet sich die Knickschutzmanschette 30 und der dazugehörige Kabelabschnitt 32 in relativ geschützter Lage zwischen den Zinken 20 und 22 innerhalb der Gesamtlänge des Handgriffs 10.

Wenn der Benutzer einen stärkeren Längs schub auf den Handgriff 10 ausüben möchte, legt er normalerweise seinen Handballen oder seine Handfläche auf das Kabelende 16 des Handgriffs 10 auf und drückt fest auf dieses Ende. Dabei kann das Kabel 18 in Richtung eines der Pfeile 34 in Fig. 3 zwischen den Zinken 20 und 22 seitlich ausweichen, wobei das Kabel 18 nur eine geringe seitliche Ausbiegung erfährt. Eine Knickwirkung auf den Kabelabschnitt 32 und die Knickschutzmanschette 30 wird dabei nicht ausgeübt. Dadurch kann die starre Sonde 14 mit erheblichen Axialdruck auch in festes Material eingedrückt werden, dessen Temperatur abgefühlt werden soll, ohne daß eine Beschädigung des Kabels 18, 32 eintritt.

## Patentansprüche

1. Knickschutzvorrichtung für ein elektrisches Kabel, das aus einem Ende des Handgriffs eines handbetätigbaren elektrischen Geräts herausgeführt ist, wobei ein Abschnitt des Kabels von einer elastischen Knickschutzmanschette umfaßt ist, dadurch gekennzeichnet, daß das kabelseitige Ende (16) des Handgriffs (10) als Gabel mit zwei flachen Zinken (20,22) ausgebildet ist, deren Breitseiten (24,26) parallel zueinander angeordnet sind und zwischen denen der die Knickschutzmanschette (30) aufweisende Kabelabschnitt (32) in unbelastetem Zustand angeordnet ist.

2. Knickschutzvorrichtung nach Anspruch 1, wobei das elektrische Gerät als Temperaturfühler ausgebildet ist, dadurch gekennzeichnet, daß aus dem dem Kabelende (16) entgegengesetzten Ende (12) des Handgriffs (10) eine langgestreckte starre Sonde (14) vorsteht.

## Claims

1. An anti-kink device for an electric cable, which is passed out of one end of the handle of a manually actuated electrical appliance, wherein one portion of the cable is surrounded by a resilient anti-kink cover,
**characterised in that** the end of the handle (10) close to the cable is constructed as a fork having two flat prongs (24), the wides sides (24, 26) of which are disposed parallel to one another and between which the cable portion (32) comprising the anti-kink cover (30) is disposed in the unstressed state.

2. An anti-kink device according to Claim 1, wherein the electrical appliance is constructed as a temperature sensor,
**characterised in that** a long rigid probe (14) projects from the end (12) of the handle (10) opposite the cable end (16).

## Revendications

1. Dispositif de protection contre le flambage pour un câble électrique sortant de l'extrémité de la poignée d'un appareil électrique utilisable à la main, une section de ce câble étant entourée par une manchette élastique de protection contre le flambage,
caractérisé en ce que
l'extrémité (16) de la poignée (10) d'où sort le câble est constitué par une fourchette comportant deux dents plates ayant (20, 22) leurs côtés larges (24, 26) parallèles entre eux et entre lesquels se trouve la section de câble (32) portant la manchette de protection contre le flambage, quand cette section n'est soumise à aucune charge.

2. Dispositif selon la revendication 1, associé à un appareil électrique de détection de la température,
caractérisé en ce que
sur l'extrémité (12) de la poignée (10) opposée à celle (16) d'où sort le câble, fait saillie une sonde rigide (14) de forme allongée.
